# EUROPEAN PATENT APPLICATION

(11) **EP 2 492 073 A1**
(43) Date of publication of application: **29.08.2012**
(21) Application number: 11155656.9
(22) Date of filing: 23.02.2011
(51) Int. Cl.: B28B 7/18, E04B 1/94, B29C 33/00, B29C 39/10, B29C 39/26, E04B 1/41, E21D 11/00

(54) **Fireproof panel equipped with coupling holes and method of manufacturing the same, and mold for the fireproof panel**

(71) Applicant: Strongplus Co., Ltd, Siheung-si Gyeonggi-do 429-935 (KR)
(72) Inventor: Park, Je-Min, Sinjeong-dong, Yangcheon, Seoul 158-773 (KR); Lee, Young-Ouk, Daechi-dong, Gangnam-gu, Seoul 135-969 (KR)
(74) Representative: Witte, Weller & Partner

(57) **Abstract**

The present invention relates to a fireproof panel equipped with coupling holes and a method of manufacturing the same, and a mold for the fireproof panel and, more particularly, to a fireproof panel equipped with coupling holes and method of manufacturing the same, and a mold for the fireproof panel, in which the coupling holes are formed in advance in a process of molding the fireproof panel and sleeves are provided in the coupling holes, thereby enabling the fireproof panel to be easily installed in a wall or a frame and also being capable of preventing the fireproof panel from being damaged in its installation process.

## Description

### BACKGROUND OF THE INVENTION

### Field of the Invention

The present invention relates to a fireproof panel equipped with coupling holes and a method of manufacturing the same, and a mold for the fireproof panel and, more particularly, to a fireproof panel equipped with coupling holes and method of manufacturing the same, and a mold for the fireproof panel, in which the coupling holes are formed in advance in a process of molding the fireproof panel and sleeves are provided in the coupling holes, thereby enabling the fireproof panel to be easily installed in a wall or a frame and also being capable of preventing the fireproof panel from being damaged in its installation process.

### Background of the Related Art

With the development of industrial economics, there is a tendency that special types of buildings, such as high-rise buildings and tunnels, are increasing. The buildings are advantageous in that they contribute greatly to an efficient utilization of land, a reduction of logistics costs, and the improvement of convenience in life, but have lots of disadvantages due to their structural characteristics.

One of the problems is that lots of casualties may occur because, if a fire occurs in a high-rise building or a tunnel, people cannot rapidly take shelter owing to its structural characteristic and toxic gases or heat fully fills the building or tunnel within a short period of time without being rapidly discharged to the outside. Furthermore, if a concrete or steel-frame structure, forming the frame of a building, is exposed to the hot air of a fire when the fire occurs, a problem occurs in the stability of the building. In a worse case, there is a possibility that the building may collapse.

It has been enacted that fire prevention facilities and extinction facilities having certain conditions or higher be installed in large buildings or tunnels, used by a lot of people, because of the above problems.

A fireproof panel refers to a structure which is made of an incombustible or flame-retardant material (that is, a finish material installed on the inner wall of a building, the inner wall of a tunnel, etc.) and is installed to fundamentally prevent a fire from occurring or to prevent the spread of a fire when the fire occurs.

Conventionally, a fireproof panel having a predetermined standard is cut into size necessary for a construction site, coupling holes are perforated in the fireproof panel, holes are bored at positions of the inner wall or frame of a building, corresponding to the coupling holes, and the fireproof panel is installed by fixing coupling elements, such as anchor bolts, to the holes.

However, the conventional fireproof panel is problematic in that the fireproof panel itself is easily damaged when the coupling elements are fixed to the panel using drilling, a hammer or the like because the fireproof panel is chiefly made of hard materials. If the fireproof panel is damaged during its installation process as described above, problems arise in that the fireproof panel has a poor appearance and, in a worse case, the fireproof panel may not play its inherent role in preventing the occurrence and spread of a fire.

Meanwhile, if a fireproof panel is severely damaged in a process of forming coupling holes in the fireproof panel or a process of installing the fireproof panel, having coupling holes, formed therein on the inner wall or frame of a building, the damaged fireproof panel has to be replaced with a new fireproof panel. Here, in the case where the coupling holes are formed in the fireproof panel at a construction site, the coupling holes must be formed in the fireproof panel so that they coincide with holes previously bored in the inner wall or frame of the building. This task is very difficult and complex, thus causing to delay the task process and to deteriorate emotional quality.

### SUMMARY OF THE INVENTION

Accordingly, the present invention has been made in view of the above problems occurring in the prior art, and it is an object of the present invention to provide a fireproof panel equipped with coupling holes and method of manufacturing the same, and a mold for the fireproof panel, in which the coupling holes are previously formed according to a certain standard and specific intervals in a process of fabricating the fireproof panel and sleeves are provided in the coupling holes as needed, thereby being capable of preventing the fireproof panel from being damaged in its installation process and enabling a worker to easily install the fireproof panel.

To achieve the above object, according to an aspect of the present invention, there is provided a method of fabricating a fireproof panel, including a mold installation step of installing hole formation pins for forming respective coupling holes in the fireproof panel at the bottom of a mold; a raw material cast step of casting raw materials for the fireproof panel in the mold having the hole formation pins installed thereon; a curing step of curing the fireproof panel cast in the mold; and a separation step of separating the cured fireproof panel.

According to another aspect of the present invention, there is provided a mold for forming a fireproof panel of a specific thickness by drying materials cast in the mold, including a bottom plate and side plates forming side walls along the edges of the bottom plate. Here, one or more hole formation pins are formed to upwardly protrude from a top surface of the bottom plate.

According to yet another aspect of the present invention, there is provided a fireproof panel formed by drying materials cast in a mold according to claim 8, wherein one or more coupling holes are formed in the fireproof panel to penetrate the fireproof panel through respective hole formation pins.

### BRIEF DESCRIPTION OF THE DRAWINGS

Further objects and advantages of the invention can be more fully understood from the following detailed description taken in conjunction with the accompanying drawings in which:

FIG. 1 is a flowchart illustrating a method of fabricating a fireproof panel equipped with coupling holes according to an embodiment of the present invention;

FIG. 2 is a diagram showing a mold for forming a fireproof panel having hole formation pins formed thereon according to an embodiment of the present invention;

FIG. 3 is a diagram showing a method of fabricating a fireproof panel equipped with coupling holes according to an embodiment of the present invention;

FIG. 4 is a diagram showing a method of fabricating a fireproof panel equipped with coupling holes according to another embodiment of the present invention;

FIG. 5 is a diagram showing a state in which a fireproof panel equipped with the coupling holes according to the present invention is used;

FIG. 6 is a diagram showing another state in which a fireproof panel equipped with the coupling holes according to the present invention is used;

FIGS. 7 and 8 are perspective view showing a mold for molding a fireproof panel according to an embodiment of the present invention;

FIGS. 9 and 10 are cross-sectional views of the fireproof panel shaped using the mold of FIGS. 7 and 8;

FIG. 11 is a diagram showing another embodiment of sound absorption grooves shown in FIGS. 9 and 10;

FIGS. 12 and 13 are perspective view showing a mold for molding a fireproof panel according to another embodiment of the present invention;

FIGS. 14 and 15 are cross-sectional views of the fireproof panel shaped using the mold of FIGS. 12 and 13;

FIG. 16 is a diagram showing the construction of sleeves shown in FIGS. 14 and 15;

FIG. 17 is a perspective view showing a fireproof panel equipped with absorption wicks according to an embodiment of the present invention;

FIG. 18 is an exploded perspective view showing the fireproof panel equipped with absorption wicks shown in FIG. 17;

FIG. 19 is a cross-sectional view showing a state in which the fireproof panel equipped with absorption wicks shown in FIG. 17 is used;

FIG. 20 is a front view showing a fireproof panel equipped with absorption wicks according to another embodiment of the present invention; and

FIGS. 21, 22, 23, and 24 are cross-sectional views showing a state in which a fireproof panel equipped with absorption wicks is used according to another embodiment of the present invention.

### DETAILED DESCRIPTION OF EMBODIMENTS

Some embodiments of the present invention will now be described in detail with reference to the accompanying drawings.

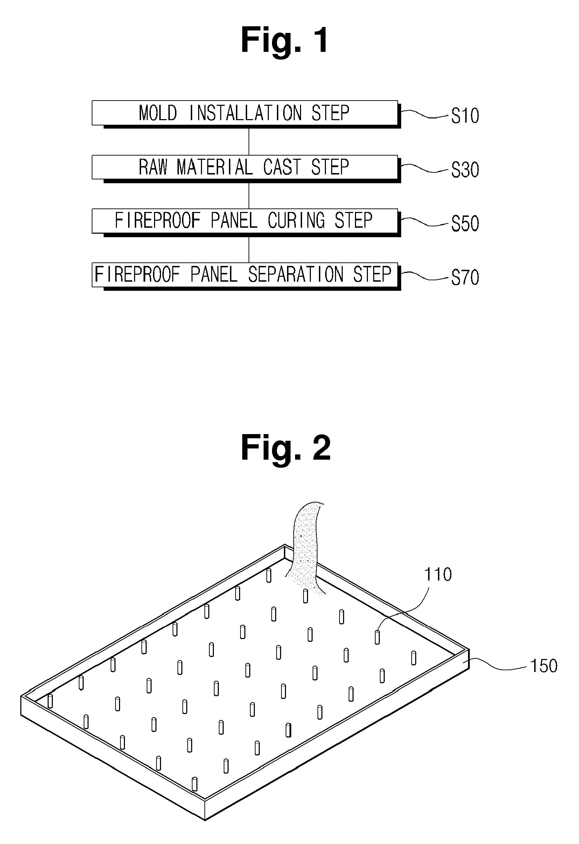

FIG. 1 is a flowchart illustrating a method of fabricating a fireproof panel equipped with coupling holes according to an embodiment of the present invention, and FIG. 2 is a diagram showing a mold for forming a fireproof panel having hole formation pins formed thereon according to an embodiment of the present invention.

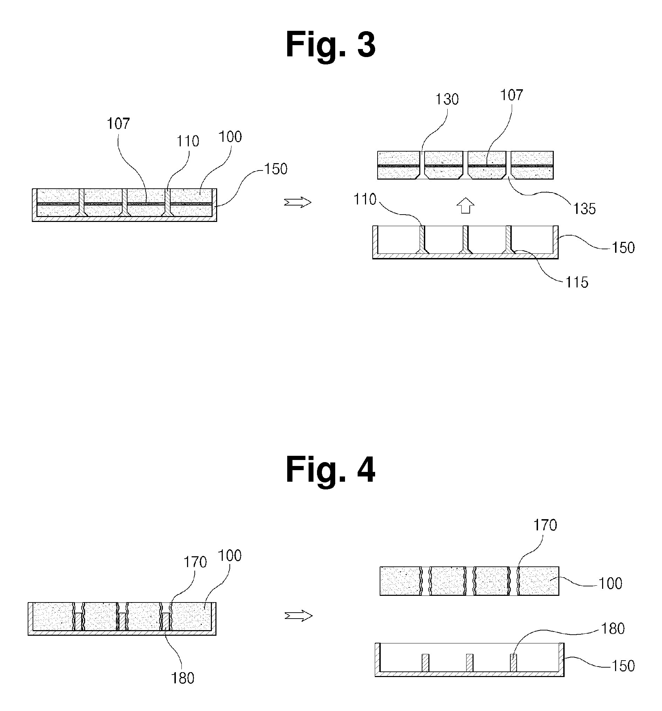

Referring to FIGS. 1 and 2, the method of fabricating a fireproof panel equipped with coupling holes according to the present invention includes a mold installation step S10 of installing hole formation pins 110 at on the bottom side of a mold 150 in order to form coupling holes (130, refer to FIG. 3) in the fireproof panel 100, a raw material cast step S30 of casting raw materials for the fireproof panel in the mold 150 having the hole formation pins 110 installed thereon, a curing step S50 of curing the fireproof panel 100 cast in the mold 150, and a separation step S70 of separating the cured fireproof panel 100.

In the mold installation step S10, the hole formation pins 110, each having a predetermined size, are vertically installed on the bottom side of the mold 150 in which the fireproof panel 100 is formed. The section of the hole formation pin 110 may be circular or polygonal. The hole formation pin 110 may be formed in a size corresponding to the size of the coupling hole 130 which will be formed in the completed fireproof panel 100. When the raw materials injected into the mold 150 are hardened to complete the fireproof panel 100 and the fireproof panel 100 is separated from the mold 150, the hole formation pins 110, together with the mold 150, are separated from the fireproof panel 100. Accordingly, the coupling holes 130, each having a shape and size corresponding to those of the hole formation pin 110, are formed at the positions of the fireproof panel 100, corresponding to the respective hole formation pins 110.

Meanwhile, sleeves (170, refer to FIG 4) are further provided in the coupling holes 130 of the fireproof panel 100 fabricated according to the method according to the present invention. The sleeves 170 may function to prevent the coupling holes 130 from being damaged in a process of fixing the fireproof panel 100 to a wall by means of coupling elements. In order to provide the sleeves 170 in the coupling holes 130, sleeve fixing pins (180, refer to FIG 4), each corresponding to the inner diameter of the sleeve 170 integrally formed with the fireproof panel 100, are installed in the sleeves 170 and the sleeves 170 are then inserted into and coupled to the sleeve fixing pins 180, instead of providing the hole formation pins 110 on the bottom side of the mold 150.

When the raw materials for the fireproof panel 100 are injected into the mold 150 and hardened after the sleeve fixing pins 180 are inserted into the sleeves 170 and then coupled thereto as described above, the sleeves 170 are integrally fixed to the fireproof panel 100. When the fireproof panel 100 hardened in the mold 150 is separated from the mold 150, the sleeves 170 integrated with the fireproof panel 100 are separated from the mold 150. Since the sleeves 170 are simply inserted into and fixed to the sleeve fixing pins 180, the sleeves 170 can be easily separated from the sleeve fixing pins 180. Furthermore, the sleeve fixing pins 180, together with the mold 150, are separated from the sleeves 170 because the sleeve fixing pins 180 are fixed to the bottom side of the mold 150.

Furthermore, it is preferred that concave-convex or curved portions be formed in the outer circumferential face of the sleeve 170 so that the sleeves 170 can be integrally formed with the fireproof panel 100 and firmly fixed thereto.

The sleeve 170 may have a cylindrical shape or a polygonal tube shape. Female screw threads may be formed in the inside of the sleeve 170 so that they can be coupled to anchors, each having male screws corresponding to the female screw threads, formed therein.

The shape of the coupling hole and the sleeve and the construction of the hole formation pin and the sleeve fixing pin will be described in detail later.

After the hole formation pins 110 (or the sleeves 170 and the sleeve fixing pins 180) are installed in the mold 150, the raw materials for the fireproof panel 100 are cast in the mold 150 (i.e., the raw material cast step S30). The raw materials for the fireproof panel 100 may include a variety of known materials. The fireproof panel 100 may be made of fire-resistant substance, comprising a filler, fire-resistant fibers, a hardening accelerator, a curing retarder, and a foaming agent. The fireproof panel 100 may be made of the raw materials, comprising ettringite 5w% and the fire-resistant substance of alumina cement 10 to 200 w% and of xonotlite 10 to 250 w%. The above composition may be fabricated using a common high-performance automatic mixing apparatus, such as Henschel Mixer (manufactured by Kneader Machinery) and Banbury Mixer, in a temperature range of 200 to 600□.

After the raw materials are cast in the mold 150, the curing step of hardening the raw materials for the fireproof panel is performed. The raw materials for the fireproof panel 100 may be hardened by using a natural dry method of naturally hardening the raw materials as times goes by or by a method of quickly hardening the raw materials using hot wind or hot air. When the curing step S50 is finished and the fireproof panel 100 is fully hardened in the mold 150, the separation step (S70) of separating the fireproof panel 100 from the mold 150 is performed, thereby completing the fireproof panel 100 equipped with the coupling holes 130.

According to an embodiment of the present invention, a synthetic resin film coating step (not shown) of coating an incombustible synthetic resin film on one side of the fireproof panel 100, subjected to the curing step S50, or on both sides of the fireproof panel 100 subjected to the separation step S70 may be further performed. A variety of known synthetic resins may be used as the incombustible synthetic resin. A process of coating the incombustible synthetic resin is known in the art, and a description thereof is omitted.

FIG. 3 is a diagram showing a method of fabricating a fireproof panel equipped with coupling holes according to an embodiment of the present invention, and FIG. 4 is a diagram showing a method of fabricating a fireproof panel equipped with coupling holes according to another embodiment of the present invention.

Referring to FIG. 3, in the method of fabricating the fireproof panel equipped with coupling holes according to the present invention, the hole formation pins 110 are vertically installed on the bottom side of the mold 150. The raw materials are cast in the mold 150 and then hardened. Accordingly, the coupling holes 130, each having a shape corresponding to each of the hole formation pins 110, are formed in the fireproof panel 100. An extension portion 115 may be further provided at the bottom of each of the hole formation pins 110. Landing grooves 135, corresponding to the respective extension portions 115 of the hole formation pins 110, may be further formed in the respective coupling holes 130. Accordingly, when the anchors are coupled to the fireproof panel, the heads of the anchors do not externally protrude from the fireproof panel.

According to an embodiment of the present invention, nonwoven fabrics 107 may be included in the fireproof panel 100 in order to reinforce the strength of the fireproof panel 100. The nonwoven fabrics 107 may be fabricated by filling the mold 150 with the raw materials for the fireproof panel 100 to a certain extent, inserting the nonwoven fabrics 107 into the fireproof panel 100, and then additionally injecting the raw materials. Materials for reinforcing the strength of the fireproof panel 100 are not necessarily limited to the nonwoven fabrics, but may include a variety of materials, such as cloth and cotton.

Referring to FIG. 4, after the sleeve fixing pins 180 are installed on the bottom side of the mold 150 and the sleeves 170 are coupled to the respective sleeve fixing pins 180, the raw materials are cast, thereby integrally forming the sleeves 170 and the fireproof panel 100. The fireproof panel 100 is separated from the mold 150 in the state in which the sleeves 170 are coupled to the fireproof panel 100. Female screw threads may be formed on the inner face of each of the sleeves 170 as needed. Furthermore, curved or concave-convex portions may be formed on the outer circumferential face of the sleeve 170 so that the sleeve 170 integrally formed with the fireproof panel 100 can be prevented from being separated or detached therefrom.

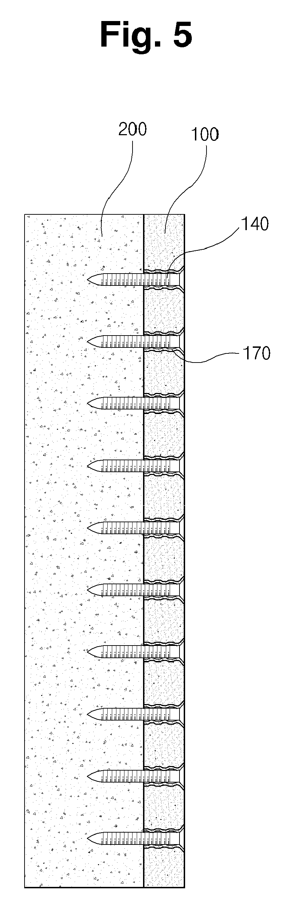

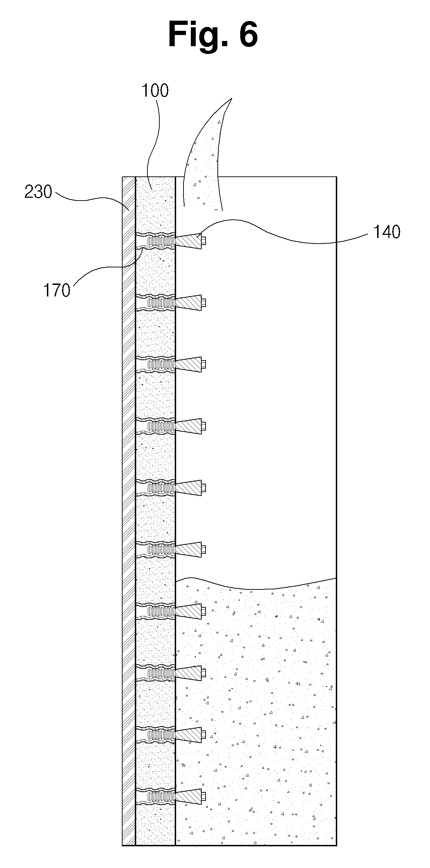

FIG. 5 is a diagram showing a state in which the fireproof panel equipped with the coupling holes according to the present invention is used, and FIG. 6 is a diagram showing another state in which the fireproof panel equipped with the coupling holes according to the present invention is used.

As shown in FIG. 5, the fireproof panel 100 equipped with coupling holes according to the present invention is attached to a wall 200 (o a ceiling) of a building or tunnel and fixed thereto by means of known fixing means, such as anchors 140.

As shown in FIG. 6, according to another embodiment of the fireproof panel equipped with coupling holes, the anchors 210, each having male screw threads formed therein, are coupled to the sleeves 170, each having female screw threads formed therein and integrally formed with the fireproof panel 100, and fixed thereto. The fireproof panel 100 to which the anchors 210 are coupled is fixed to the inner face of a concrete mold 230, and concrete is then cast. When the fireproof panel 100 to which the anchors 210 are coupled as described above is fixed to the inner face of the concrete mold 230 and then the concrete is cast, the anchors 210 fixed to the fireproof panel 100 are firmly fixed to the concrete with them being inserted into the concrete. Although the female screw threads are not formed in the inside of the sleeve 170, the anchor 140 may tap the inside of the sleeve 170 and may be fixed thereto.

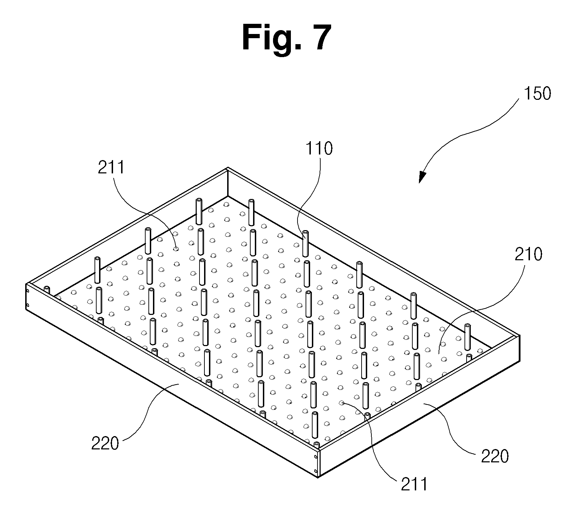

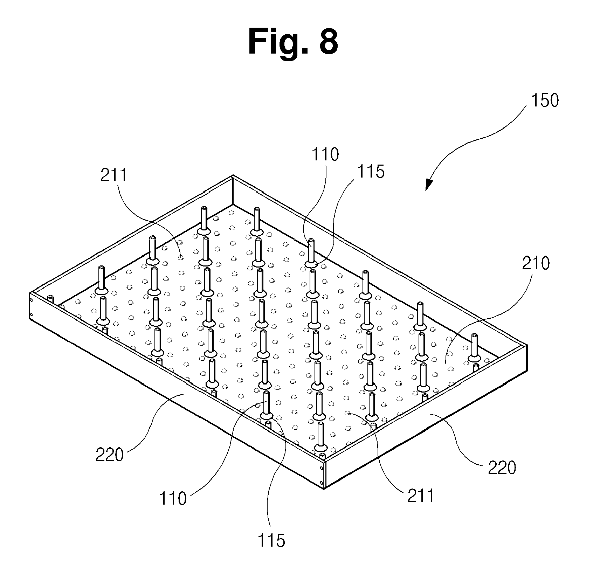

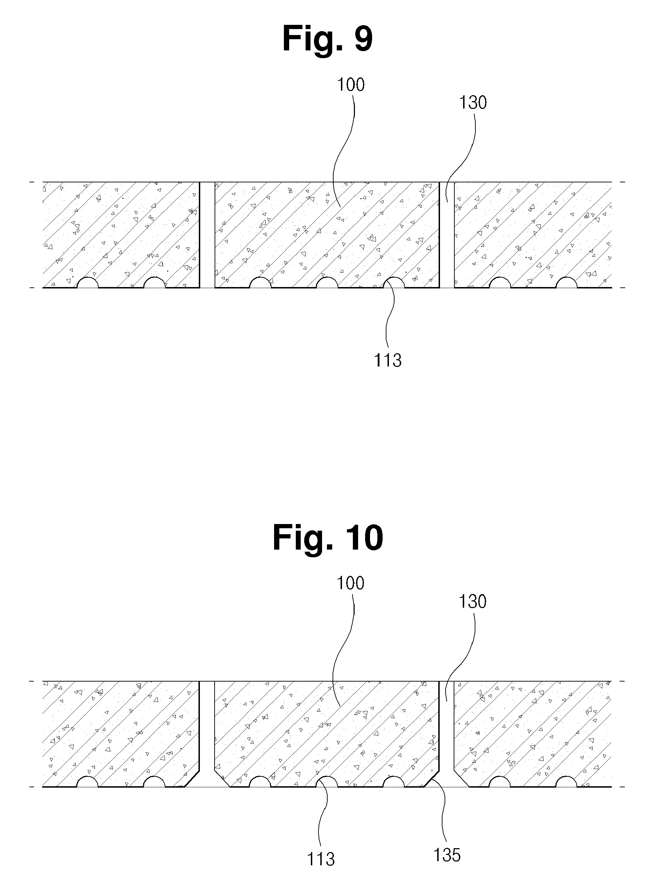

FIGS. 7 and 8 are perspective view showing a mold for molding a fireproof panel according to an embodiment of the present invention, FIGS. 9 and 10 are cross-sectional views of the fireproof panel shaped using the mold of FIGS. 7 and 8, and FIG. 11 is a diagram showing another embodiment of sound absorption grooves shown in FIGS. 9 and 10.

As shown in FIG. 7, the mold 150 for shaping a fireproof panel according to the embodiment of the present invention includes a bottom plate 210 and side plates 220 formed on the edges of the bottom plate 210 and configured to form respective side walls. The mold 150 may generally have a square frame as shown, but not limited thereto.

The mold 150 has its internal space defined by the bottom plate 210 and the side plates 220. Materials for a fireproof panel may be cast in the space. The materials for a fireproof panel may be hardened naturally as time goes by or may be hardened through a heating and dry process using heating means in the state in which the materials are cast in the mold 150, thus forming the fireproof panel 100. The shape or size of the bottom plate 210 and the side plates 220 of the mold 150 may correspond to the shape of size of the fireproof panel 100 to be formed.

The mold 150 may include the one or more hole formation pins 110 upwardly protruding from a top surface of the bottom plate 210. The hole formation pins 110 may have a length generally corresponding to the thickness of the fireproof panel 100 to be formed. The hole formation pin 110 may have a cylindrical or polygonal shape, as shown in FIGS. 7 and 8.

When the fireproof panel 100 cast in the internal space of the mold 150 and then dried is demolded from the mold 150, the coupling holes 130 are formed by the hole formation pins 110 of the mold 150, as shown in FIG. 9. The coupling holes 130 are formed to penetrate the fireproof panel 100 upward and downward.

Since the coupling holes 130 are formed in the fireproof panel 100, a drill can penetrate each of the coupling holes 130 formed in the fireproof panel 100 when a drilling task for installing pipes, included in anchor members, in the wall of a concrete structure to which the fireproof panel 100 is fixed in a construction process. Accordingly, the drilling task has only to be performed on only the wall of the concrete structure in the state in which the drill has penetrated the coupling hole 130. Furthermore, the fireproof panel 100 is not damaged because the drilling task needs not to be performed on the fireproof panel 100. Furthermore, a bolt member (not shown) included in the anchor member is inserted through the coupling hole 130 and then fixed to a pipe (not shown) installed in the wall of the concrete structure, so that the fireproof panel 100 can be attached and fixed to the concrete structure. The same principle applies when the fireproof panel 100 is fixed to a steel frame. The fireproof panel 100has only to be directly fixed to the steel frame in the state in which fixing means, such as a self-drilling screw (not shown), has penetrated the coupling holes 130.

A number of protrusions 211 may be formed at the bottom plate 210 of the mold 150. Grooves are formed in one side (i.e., a bottom in the drawings) of the fireproof panel 100 by means of the protrusions 211 so that they correspond to the respective protrusions 211. The grooves become sound absorption grooves 113 for attenuating sound transferred to one side of the fireproof panel 100.

As shown in FIGS. 7 and 8, each of the protrusions 211 is formed to have a hemispheric shape. Accordingly, as shown in FIGS. 9, 10, 14, and 15, the sound absorption grooves 113 are also formed to have a hemispheric form at the bottom of the fireproof panel 100, and they correspond to the respective protrusions 211.

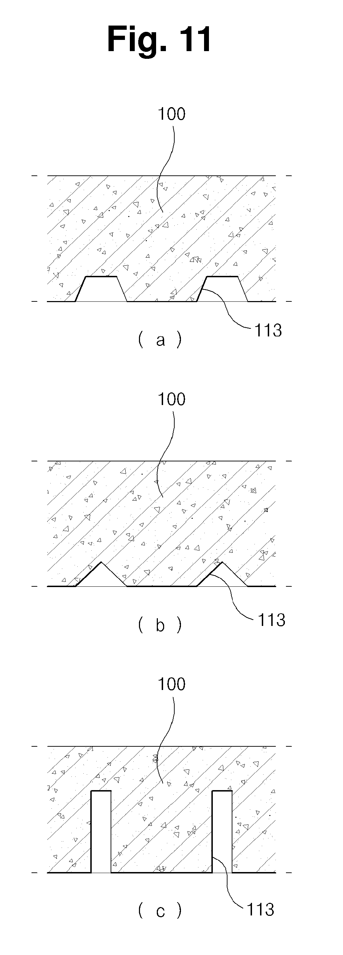

However, the protrusion 211 is not limited to the hemispheric form, but may have a variety of shapes, such as a cylindrical shape or a polypyramid shape including a triangular pyramid shape. Furthermore, the sound absorption grooves 113 corresponding to the respective protrusions 211 may have a variety of sectional shapes and various depths, as shown in FIG. 11 (a) to (c).

As in the example of the mold 150 shown in FIG. 8, the extension portion 115 may be further formed at the lower end portion of the hole formation pin 110. The extension portions 115 has a diameter greater than the hole formation pin 110 and protrudes from the top surface of the bottom plate 210. Furthermore, the hole formation pin 110 is formed at the upper end portion of the extension portion 115. When the materials for a fireproof panel are cast in the mold 150 and then dried to form the fireproof panel 100, the landing grooves 135 are formed owing to the respective extension portions 115 as shown in FIG. 10. The landing groove 135 is formed to have a diameter greater than the coupling hole 130 on the lower side of the coupling hole 130. Fixing means for fixing the fireproof panel 100 to a concrete structure or a steel frame, such as a bolt member or a self-drilling screw, commonly has a head portion, having a diameter greater than its body portion which penetrates the coupling hole 130. The landing groove 135 provides a space into which the head portion of the fixing means is inserted and seated. The landing groove 135 functions to prevent the head portion of a bolt member or a screw from protruding toward one side (i.e., a bottom in the shown example) of the fireproof panel 100. Accordingly, in the case where an additional finish material is formed on one side of the fireproof panel 100, one side of the fireproof panel 100 have the same plane without protruding, so that the finish material can be easily formed.

Furthermore, in the example in which the extension portions 115 are formed, the total length of the hole formation pins 110 and the extension portions 115 may correspond to the thickness of the fireproof panel 100 which will be formed.

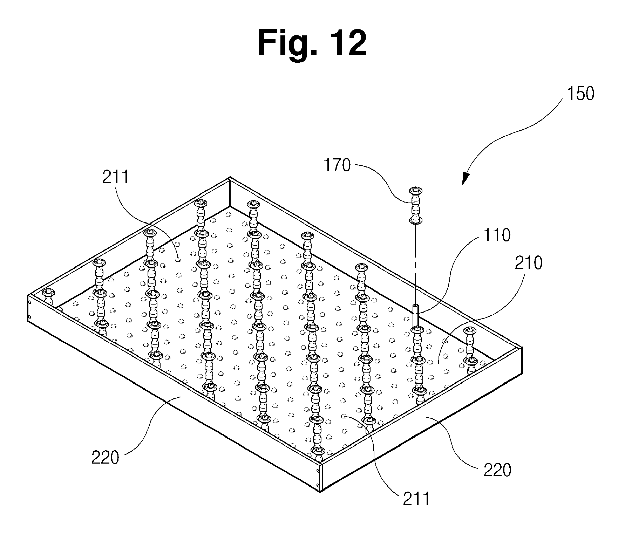

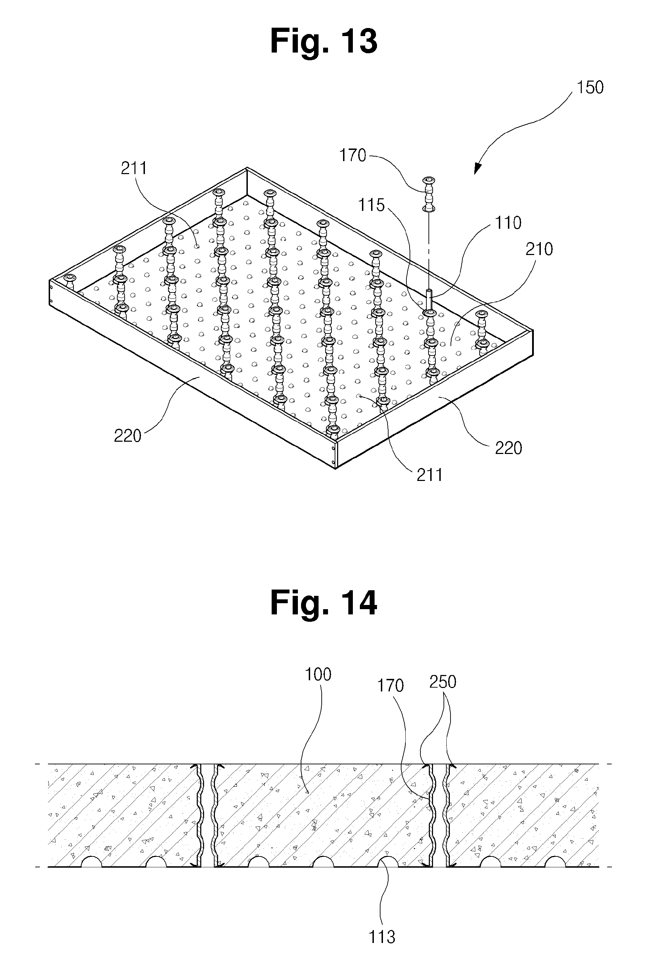

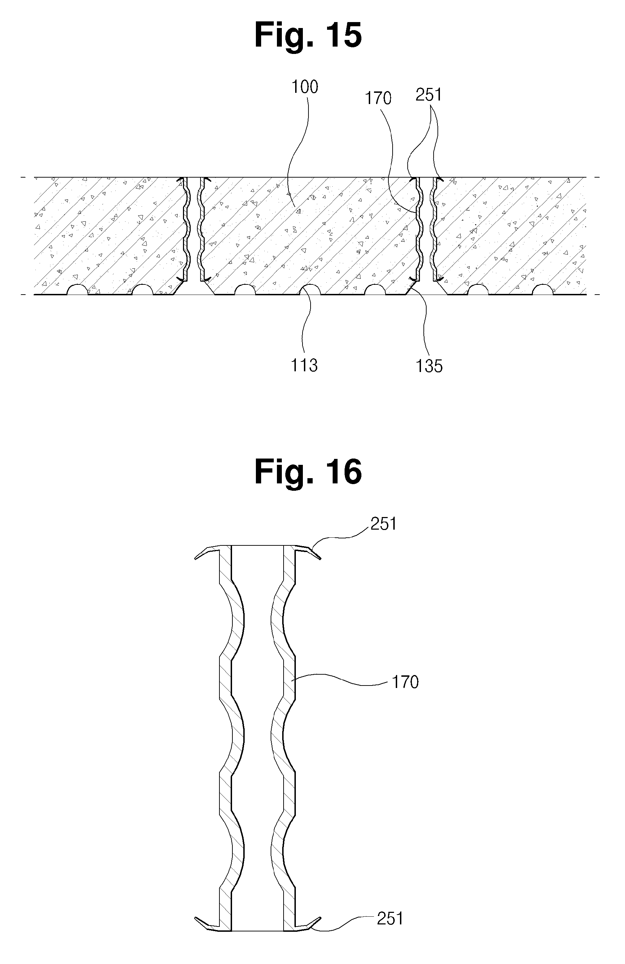

FIGS. 12 and 13 are perspective view showing a mold for molding a fireproof panel according to another embodiment of the present invention, FIGS. 14 and 15 are cross-sectional views of the fireproof panel shaped using the mold of FIGS. 12 and 13, and FIG. 16 is a diagram showing the construction of sleeves shown in FIGS. 14 and 15.

The mold 150 for shaping a fireproof panel show in FIG. 12 according to another embodiment of the present invention includes a bottom plate 210 and side plates 220, like the mold 150 of the above embodiments. In a process of drying materials for a fireproof panel cast in the mold 150, the fireproof panel 100 can be formed.

In the mold 150 of the present embodiment, hole formation pins 110 are formed on a top of the bottom plate 210. Sleeves 170 detachable from the respective hole formation pins 110 are inserted into the hole formation pins 110. Each of the sleeves 170 has a hollow shape having its top and bottom ends opened. The hole formation pin 110 can be inserted into the internal space of the sleeve 170 through the opened bottom end, so that the sleeve 170 can be inserted into the hole formation pin 110.

Materials for a fireproof panel are cast in the mold 150 in the state in which the sleeve 170 is detachably inserted into the hole formation pin 110. When the cast materials for a fireproof panel are dried to form the fireproof panel 100, the sleeves 170 are fixed to the fireproof panel 100. The sleeves 170 can be separated from the hole formation pins 110. Accordingly, when the fireproof panel 100 is demolded from the mold 150, the sleeves 170 are also separated from the hole formation pins 110 with them being fixed to the fireproof panel 100.

The sleeve 170 may have a length corresponding to the thickness of the fireproof panel 100. Accordingly, the sleeves 170 fixed to the demolded fireproof panel 100, as shown in FIG. 14, are formed to penetrate the fireproof panel 100 upward and downward. Furthermore, holes are formed to penetrate the internal spaces of the respective sleeves 170 (i.e., within the sleeves 170) upward and downward and to penetrate the fireproof panel 100 upward and downward. The holes have the same function as the coupling holes 130 described in connection with the above embodiments.

The sleeves 170 may have a variety of shapes, such as a cylindrical shape or a polygonal tube shape. It is preferred that the sleeves 170 be firmly fixed to the fireproof panel 100 without being separated therefrom in the process of demolding the fireproof panel 100 or the process of fixing the fireproof panel 100 to a concrete structure or a steel frame so that the sleeves 170 can be firmly fixed to the fireproof panel 100 formed in the dry process of the materials for a fireproof panel.

To this end, the outer circumferential face of the sleeve 170 may have curved faces as shown. Flange portions 251 outwardly curved may be formed on the respective upper and lower end portions of the sleeve 170.

FIG. 13 shows an example in which an extension portion 115, such as that described with reference to FIG. 8, is further formed at the lower end portion of the hole formation pin 110. In this example, the lower end portion of the sleeve 170 is inserted into the hole formation pin 110 with it touching a top of the extension portion 115.

The fireproof panel 100 formed using the mold 150 of FIG. 13 includes landing grooves 135, such as those described in connection with the above embodiment, as shown in FIG. 15. The landing groove 135 is formed at a portion of the fireproof panel 100 (i.e., the lower side of the sleeve 170) owing to the extension portions 115.

As shown in FIG. 16, the outer circumferential face of the sleeve 170 according to the present invention may be curved in the length direction, or concave-convex portions may be formed on the outer circumferential face of the sleeve 170. Accordingly, the sleeve 170 integrally formed with the fireproof panel 100 can be prevented from being separated from the fireproof panel 100. Furthermore, the inner circumferential face of the sleeve 170 may also be curved in the length direction, or concave-convex portions may be formed on the inner circumferential face of the sleeve 170. Accordingly, a coupling apparatus may be tapped and coupled to the sleeve 170.

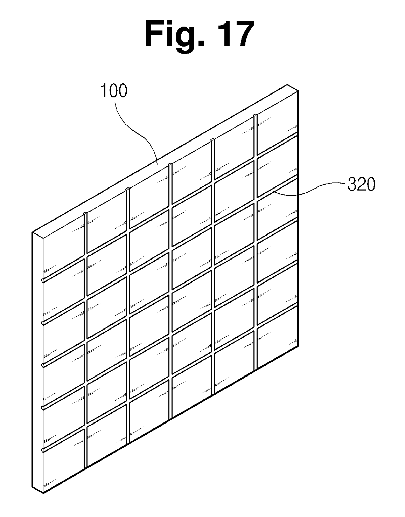

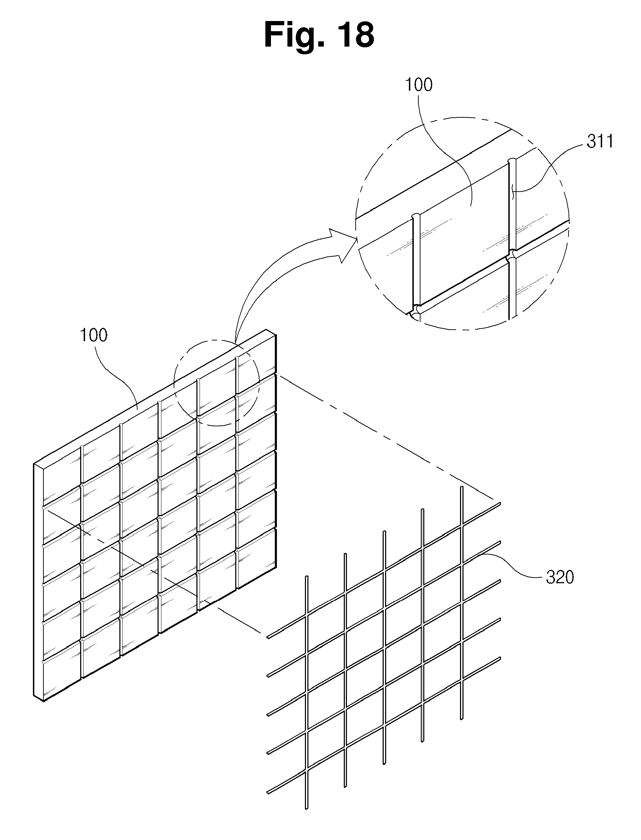

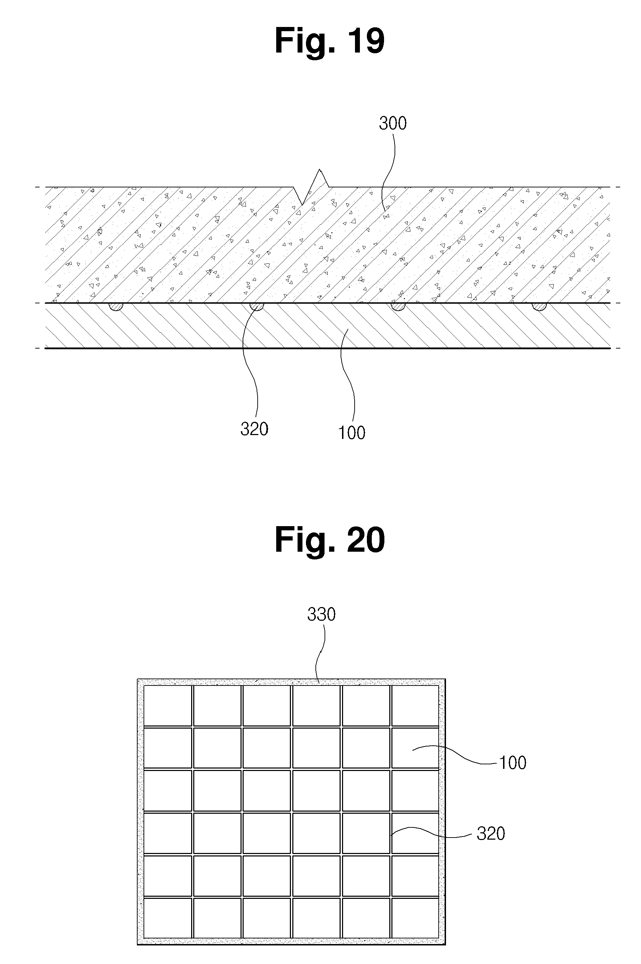

FIG. 17 is a perspective view showing a fireproof panel equipped with absorption wicks according to an embodiment of the present invention, FIG. 18 is an exploded perspective view showing the fireproof panel equipped with absorption wicks shown in FIG. 17, and FIG. 19 is a cross-sectional view showing a state in which the fireproof panel equipped with absorption wicks shown in FIG. 17 is used.

Like a common fireproof panel, a fireproof panel 100 including absorption wicks 320 according to the embodiment of the present invention is installed in the wall, post, beam, bottom, or roof of a building or structure. The fireproof panel 100 is not easily burnt by a flame, configured to prevent the movement of a flame, and formed to have a fire-resistant function of resisting a fire for a certain period of time. Furthermore, the fireproof panel 100 according to the present invention may be used in a tunnel, and so on. It is assumed that the fireproof panel 100 equipped with the absorption wicks 320 according to the present invention is the fireproof panel equipped with the coupling holes or the sleeves as described above with reference to FIGS. 1 to 16. In the present embodiment, the coupling holes or the sleeves are omitted, for convenience of description.

The fireproof panel 100 according to the present invention is made of flame-retardant or incombustible materials, but may be made of various materials having the flame-retardant or incombustible properties. The fireproof panel 100 may be made of a gypsum board, antimicrobial gypsum board or the like. Alternatively, the fireproof panel 100 may be made of a cellulose fiber reinforced cement board for water-resistance, but is preferably made of other materials because the cellulose fiber reinforced cement board may include a carcinogenic substance.

Furthermore, the fireproof panel 100 may be formed of a magnesium board which is incombustible, strong in strength, and made of ceramic materials. The magnesia cement and the magnesium board may be formed by generating hydrate of hydro-oxy chloride of magnesium metal between active magnesium oxide and magnesium chloride, by using magnesium sulfate instead of magnesium chloride, or by performing hydration through a combination of magnesium chloride and magnesium sulfate.

Alternatively, the fireproof panel 100 may be made of flame-retardant or fireproof-processed polyester or polyurethane felt.

In the fireproof panel 100 equipped with the absorption wicks according to the embodiment of the present invention, the fireproof panel 100 may be formed of a fireproof panel. The fireproof panel is made of a fire-resistant substance, containing a filler, fire-resistant fibers, a hardening accelerator, and a curing retarder, a foaming agent, and so on. The fireproof panel 100 may be made of raw materials, comprising ettringite 5w% and the fire-resistant substance of alumina cement 10 to 200 w% and xonotlite 10 to 250 w%. The fireproof panel 100 is coupled to a wall, bottom, or ceiling 300, etc. A plurality of the fireproof panels 100 is consecutively coupled to the wall 300, etc. To this end, it is preferred that the fireproof panel 100 have a rectangular shape having a predetermined standard.

The absorption wicks 320 are coupled to one (that is, a face coupled to the wall 300, etc.) of both sides of the fireproof panel 100. Insertion valleys 311 are formed in one of both sides of the fireproof panel 100 and coupled to the absorption wicks 320.

The insertion valleys 311 are depressed in the surface of the fireproof panel 100 and are configured to have a lattice form. The absorption wicks 320 are inserted into the insertion valleys 311 so that they do not protrude from the insertion valleys 311. The absorption wicks 320 are formed in the surface of the fireproof panel 100 so that do not protrude from the surface of the fireproof panel 100. The absorption wicks 320 function to make the fireproof panel 100 closely adhered to the wall 300, etc. and to prevent moisture from moving to paths other than the absorption wicks 320.

The absorption wicks 320 inserted into the insertion valleys 311 function to absorb moisture and preferably have a fiber form so that absorbed moisture can move along the absorption wicks 320 without being easily deviated from the absorption wicks 320. The absorption wicks 320 may be made of natural fibers or synthetic fibers. The absorption wicks 320 preferably have a form in which a number of fine fiber strands are combined so that agglutinated moisture can be easily absorbed by adhesion properties and a capillary phenomenon and agglutinated moisture can easily move along the absorption wicks 320.

In particular, the absorption wicks 320 preferably are made of glass fibers from among the synthetic fibers. When the absorption wicks 320 are made of glass fibers, they are expected to be light, durable, and lasting as compared with natural fiber. Furthermore, there is an advantage in that the amount of production of the absorption wicks 320 can be easily controlled.

The absorption wicks 320 inserted into the insertion valleys 311 are arranged in a lattice form in the fireproof panel 100. Since the absorption wicks 320 are repeatedly arranged at certain intervals, moisture absorbed by the absorption wicks 320 can be absorbed in surrounding areas on the basis of the absorbed area. In other words, if water leaks from the boundary of the fireproof panel 100 and the wall 300, a bottom, or a ceiling, the leaked moisture simply flows downwardly or does not flow randomly in any one direction, but gathers at a certain area on the basis of a point where the leakage of water is generated.

Consequently, in the case where the fireproof panel 100 equipped with the absorption wicks 320 according to the present invention is installed at the wall or ceiling 300, if a leakage of water is generated at a specific point, moisture is focused at and absorbed in the fireproof panel 100 located at a point where the leakage of water is generated. Accordingly, moisture is effectively prohibited from moving to neighboring fireproof panels 100, thereby preventing the neighboring fireproof panels 100 from being damaged. Furthermore, moisture absorbed by the absorption wicks 320 formed in the fireproof panel 100 at the point where the leakage of water is generated is absorbed into the fireproof panel 100, and can be easily checked externally. Since the point where the leakage of water is generated can be easily checked, only the fireproof panel 100 located at the point where the leakage of water is generated can be separated and replaced.

In accordance with the fireproof panel 100 equipped with the absorption wicks 320 according to the present invention, the absorption wicks 320 are coupled to one of both sides of the fireproof panel 100 with them being exposed and configured to absorb moisture. Accordingly, moisture can be prevented from moving at the boundary of the fireproof panel 100 and the wall or ceiling 300 and also prevented from spreading to other neighboring fireproof panels 100, thereby preventing damage to the neighboring fireproof panels 100. Furthermore, an area where a leakage of water has occurred can be easily detected by monitoring a change in the state of the fireproof panel 100 based on moisture absorbed by the area where the leakage of water has occurred.

Furthermore, the absorption wicks 320 are formed in such a way not to protrude from the fireproof panel 100, and the fireproof panel 100 is closely adhered to the wall 300. Accordingly, moisture leaked at the boundary of the fireproof panel 100 and the wall 300 moves only along the absorption wicks 320 and does not spread to areas where other fireproof panels 100 are formed.

FIG. 20 is a front view showing a fireproof panel 100 equipped with absorption wicks 320 according to another embodiment of the present invention.

In the fireproof panel 100 equipped with absorption wicks 320 according to another embodiment of the present invention, a finish material 330 is formed at the edges of the fireproof panel 100 in order to block the movement of water along the absorption wicks 320.

The finish material 330 is made of waterproof materials in order to prevent the soak of water. The finish material 330 may be coated on the edges of the fireproof panel 100 or may be separately coupled to the fireproof panel 100. The finish material 330 may be made of silicon having excellent waterproof properties or other materials coated with rubber or wax.

The finish material 330 is formed at the ends and edges of the fireproof panel 100 and configured to block moisture, absorbed in the absorption wicks 320, from moving to other neighboring fireproof panels 100. In other words, the finish material 330 is formed to block a path along which water moves on the absorption wicks 320.

The finish material 330 is formed at the four edges of the fireproof panel 100 and formed to have a thickness smaller than the fireproof panel 100 in order not to hinder the fireproof panel 100 from adhering to the wall 300, etc.

In the fireproof panel 100 equipped with the absorption wicks 320 as described above according to the present invention, the finish material 330 for blocking the movement of water along the absorption wicks 320 is formed at the edges of the fireproof panel 100. Accordingly, the movement of water to other neighboring fireproof panels 100 can be effectively prevented, damage to neighboring fireproof panels 100 can be prevented, and a point where a leakage of water is generated can be easily checked.

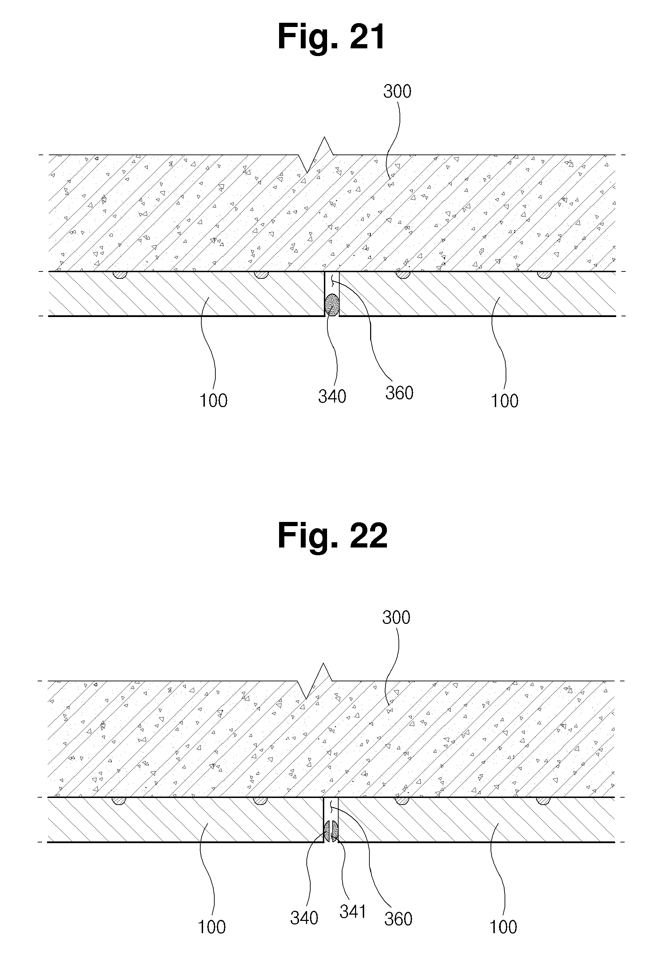

FIGS. 21, 22, 23, and 24 are cross-sectional views showing a state in which the fireproof panel 100 equipped with absorption wicks is used according to another embodiment of the present invention.

In the installation structure of the fireproof panel 100 equipped with the absorption wicks according to the present invention, the fireproof panel 100 is equipped with a number of the absorption wicks, and a number of the fireproof panels 100 are consecutively arranged with them being spaced apart from one another. Accordingly, a separation groove 360 is formed between the fireproof panels 100.

In this example, however, the finish material is not formed. A first calking material 340 or a second calking material 350 is used instead of the finish material, as will described later.

When the fireproof panels 100 equipped with the absorption wicks are attached to a ceiling or a wall, they are arranged with them being spaced apart from one another, so that the separation groove 360 is formed between the fireproof panels 100. It is preferred that the separation groove 360 have a width of about 1 to 2 mm by taking the extension or contraction of the fireproof panel 100, including the absorption wicks, into consideration.

The first calking material 340 is inserted into the separation groove 360, as shown in FIGS. 21 and 22. When the first calking material 340 is inserted, a discharge hole 341 is formed on the first calking material 340. The discharge hole 341 may be formed using a drill, etc.

The first calking material 340 may be made of soft materials, such as silicon. Accordingly, the fireproof panel 100 including the absorption wicks can be extended and contracted.

The discharge hole 341 functions to discharge moisture therein. If a lot of moisture is absorbed through the fireproof panel 100 including the absorption wicks, the moisture moving to the periphery of the fireproof panel 100 is discharged through the discharge hole 341. Accordingly, damage to other neighboring fireproof panels 100 can be prevented, and an area where a leakage of water has occurred can be detected.

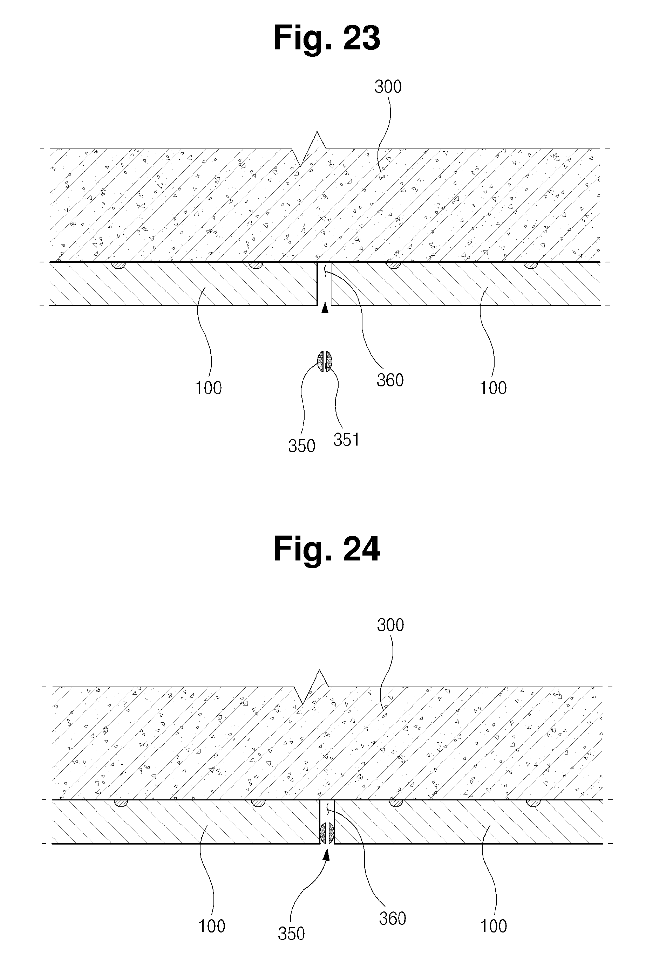

FIGS. 23 and 24 are cross-sectional views showing a state in which the fireproof panel 100 including the absorption wicks is installed according to another embodiment of the present invention.

In the previous embodiment, the first calking material 340 is inserted into the separation groove 360 and the discharge hole 341 is then formed. However, in the present embodiment of the present invention, the installation structure of the fireproof panel 100 equipped with the absorption wicks may be formed in such a manner that the discharge hole 341 is first formed in the separation groove 360, and a second calking material 350 made of soft materials is then inserted into the discharge hole 341.

In this case, an inconvenience that the first calking material 340 is inserted into the separation groove 360 and the discharge hole 341 is then formed can be solved, and the installation task of the fireproof panel 100 can be easily performed.

As described above, when the fireproof panel 100 equipped with the absorption wicks according to the present invention is installed in a ceiling, a wall, etc., the fireproof panels 100 are installed with them spaced apart from one another so that the separation grooves 360 are formed therebetween. The first calking material 340 or the second calking material 350, forming the respective discharge holes 341 and 351, are inserted into the separation groove 360. Accordingly, a sense of appearance can be prevent from being deteriorate, and a change in the shape of the fireproof panel 100 (that is, the extension or contraction of the fireproof panel 100 according to surrounding temperature, a humidity condition, the amount of absorbed moisture, etc.) can be guaranteed. Furthermore, damage to other neighboring fireproof panels 100 can be minimized because moisture is discharged through the discharge holes 341 and 351.

In accordance with the fireproof panel equipped with coupling holes and the method of fabricating the same, and a mold for the fireproof panel according to the present invention, a worker can easily attach or detach the fireproof panel, commonly used in construction sites, without damaging the panel and can fabricate the fireproof panels using the method.

As described above, in accordance with the fireproof panel equipped with coupling holes and the method of fabricating the same according to the present invention, the coupling holes are previously formed in a process of fabricating the fireproof panels. Accordingly, damage to the fireproof panel can be prevented in a process of forming the coupling holes at task sites or a process of installing the fireproof panels. Furthermore, there is an advantage in that the fireproof panel can be replaced easily and accurately when a damaged fireproof panel is replaced with a new fireproof panel because the coupling holes are standardized.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method of fabricating a fireproof panel, comprising:
a mold installation step of installing hole formation pins for forming respective coupling holes in the fireproof panel at a bottom of a mold;
a raw material cast step of casting raw materials for the fireproof panel in the mold having the hole formation pins installed thereon;
a curing step of curing the fireproof panel cast in the mold; and
a separation step of separating the cured fireproof panel.

2. The method as claimed in claim 1, further comprising a synthetic resin film coating step of coating an incombustible synthetic resin film on a surface of the fireproof panel, after the curing step or the separation step.

3. The method as claimed in claim 1, wherein the mold installation step comprises the step of installing sleeve fixing pins for fixing respective sleeves at a bottom of the mold, wherein the sleeves integrally formed with the fireproof panel and configured to form the coupling holes are provided in the respective sleeve fixing pins.

4. The method as claimed in claim 3, wherein female screw threads are formed in an inner circumferential face of the sleeve.

5. A mold for forming a fireproof panel of a specific thickness by drying materials cast in the mold, the mold comprising:
a bottom plate; and
side plates forming side walls along edges of the bottom plate,
wherein one or more hole formation pins upwardly protrude from a top surface of the bottom plate.

6. The mold as claimed in claim 5, further comprising hollow sleeves detachably inserted into the respective hole formation pins, wherein each of the hollow sleeves is configured to have upper and lower end portions opened.

7. The mold as claimed in claim 6, wherein female screw threads are formed in an inner circumferential face of the hollow sleeves.

8. The mold as claimed claim 5, wherein extension portions are further formed at the respective lower end portions of the hole formation pins.

9. The mold as claimed in claim 5, wherein a number of protrusions are formed on a top surface of the bottom plate.

10. A fireproof panel formed by drying materials cast in a mold according to claim 8, wherein one or more coupling holes are formed in the fireproof panel to penetrate the fireproof panel through respective hole formation pins or sleeves are formed in the fireproof panel to penetrate the fireproof panel upward and downward and fixed within the fireproof panel, and landing grooves are formed by respective extension portions at positions of the fireproof panel, corresponding to respective lower sides of the coupling holes or the sleeves.

11. A fireproof panel formed by drying materials cast in a mold according to claim 9, wherein one or more coupling holes are formed in the fireproof panel to penetrate the fireproof panel through respective hole formation pins or sleeves are formed in the fireproof panel to penetrate the fireproof panel upward and downward and fixed within the fireproof panel, and sound absorption grooves are formed by respective protrusions at the bottom of the fireproof panel.

12. The fireproof panel as claimed in claim 5, further comprising absorption wicks coupled to one side of the fireproof panel in an exposed way and configured to absorb moisture.

13. The fireproof panel as claimed in claim 12, further comprising insertion valleys formed on the one side of the fireproof panel and configured to have the absorption wicks inserted therein, wherein the absorption wicks inserted into the insertion valleys do not protrude from the fireproof panel and form an identical plane.

14. An installation structure of a fireproof panel, wherein the installation structure is formed by a number of fireproof panels, each equipped with absorption wicks, according to claim 12, the fireproof panels are spaced apart from one another and consecutively arranged, and a separation groove is formed between the fireproof panels.

15. The installation structure as claimed in claim 14, further comprising:
a first calking material made of a soft material and inserted into the separation grooves, and
a discharge hole formed in the first calking material.
